# EUROPÄISCHE PATENTSCHRIFT

(11) **EP 1 074 948 B1**
(45) Veröffentlichungstag und Bekanntmachung des Hinweises auf die Patenterteilung: **07.12.2005**
(21) Anmeldenummer: 00115950.8
(22) Anmeldetag: 26.07.2000
(51) Int. Cl.: G01P 1/14, G01D 15/32, G07C 5/12, G07C 5/06

(54) **Anordnung zum Festspannen eines Diagrammscheibenbündels auf einer vom Registrierlaufwerk eines Fahrtschreibers zeitsynchron angetriebenen Aufnahme**
Arrangement for clamping a graph chart bundle on a plate driven in time-synchronous manner by a recording drive mechanism of a tachograph
Dispositif pour le serrage d'une liasse de disques de diagramme sur un support entraîné en synchronisme temporel par un mécanisme d'entraînement d'enregistrement dans un tachygraphe

(30) Priorität: 06.08.1999 DE 29913770 U
(43) Veröffentlichungstag der Anmeldung: 07.02.2001
(73) Patentinhaber: SIEMENS AKTIENGESELLSCHAFT, 80333 München (DE)
(72) Erfinder: Wahler, Torsten, 78073 Bad Dürrheim (DE)

(56) Entgegenhaltungen:
- GB-A- 1 425 360
- GB-A- 1 515 263
- US-A- 1 910 361
- US-A- 2 938 760

## Beschreibung

Die Erfindung betrifft eine Anordnung zum Festspannen eines Diagrammscheibenbündels auf einer vom Registrierlaufwerk eines Fahrtschreibers zeitsynchron angetriebenen Aufnahme, wobei an der Aufnahme ein Zentrierdorn ausgebildet und das einem abschnittweisen, zeitlich aber ununterbrochenen Registrieren dienende Diagrammscheibenbündel mit einer auf den Zentrierdorn aufsteckbaren Laufbuchse versehen ist, welche den einzelnen im Verlauf des Registrierens nach und nach von dem Diagrammscheibenbündel abgetrennten und an einem gerätefesten Anschlag anliegenden Diagrammscheiben als Lager dient, und wobei Mittel zum Befestigen der Laufbuchse auf der Aufnahme vorgesehen sind.

Bekanntlich werden Diagrammscheibenbündel vorteilhaft dann verwendet, wenn ein in seinem Zusammenhang interessierender Vorgang über einen längeren Zeitbereich erfaßt oder eine bessere Auflösung der Registrierungen innerhalb eines bestimmten zeitlichen Regisrtrierbereichs erzielt werden sollen, als dies mit einer einzelnen in ihrer Registrierkapazität relativ eng begrenzten Diagrammscheibe möglich wäre. Ein bevorzugtes Anwendungsbeispiel für derartige Diagrammscheibenbündel, bei denen die einzelnen Diagrammscheiben jeweils mit einem sektorförmigen Ausschnitt versehen und gestaffelt zueinander angeordnet sind, stellen Fahrtschreiber dar, deren Bedienung durch Einlegen von Diagrammscheibenbündeln, die beispielsweise eine wöchentliche Registrierung gestatten, wesentlich vereinfacht wird.

Die mit einem Diagrammscheibenbündel angestrebte ununterbrochene Registrierung über einen größeren Zeitabschnitt wird dadurch erzielt, daß die Registrierorgane des Fahrtschreibers nach nahezu einer Umdrehung infolge der sektorförmigen Ausschnitte von einer Diagrammscheibe auf die im Bündel nächstfolgende herabgleiten. Die weitere Registrierung erfolgt somit ohne Zeitversatz auf einer neuen, noch unbeschriebenen Diagrammscheibe, während die beschriebene Diagrammscheibe, die beispielsweise durch einen Papierstreifen mit der im Registrierablauf letzten Diagrammscheibe oder einer Blindscheibe verbunden ist, im Laufe der Weiterbewegung des Diagrammscheibenbündels mittels einer entsprechend der Verbindungstechnik des Diagrammscheibenbündels geeigneten Trennvorrichtung, beispielsweise eines Messers, welches ebenfalls in den Ausschnitt der beschriebenen Diagrammscheibe einfällt und dann zwischen der beschriebenen und der nächstfolgenden Diagrammscheibe wirksam ist, abgetrennt wird, Im weiteren Verlauf führt die Friktion der abgetrennten Diagrammscheibe mit dem verbleibenden und weiter umlaufenden Restbündel bzw. mit dessen mit der Blindscheibe fest verbundenen Laufbuchse die abgetrennte Diagrammscheibe gegen einen ortsfesten Anschlag.

Das Festspannen eines Diagrammscheibenbündels auf einer, beispielsweise in einem aufklappbaren Deckel oder einer herausziehbaren Schublade eines Fahrtschreibers angeordneten, uhrzeitabhängig angetriebenen Aufnahme erfolgt üblicherweise mittels einer mit dem Zentrierdorn verbindbaren Renkmutter, wobei das Diagrammscheibenbündel zunächst anhand der auf der im Diagrammscheibenbündel oben liegenden Diagrammscheibe aufgedruckten Uhrzeitskale für ein uhrzeitrichtiges Registrieren auszurichten ist. Dies erfolgt indem der der aktuellen Uhrzeit entsprechende Skalenwert auf die Registrierlinie ausgerichtet wird, das heißt auf die Linie ausgerichtet wird, die die Registrierorgane beschreiben, wenn sie ausgelenkt werden.

Nachteilig ist bei dieser Art und Weise des Festspannens eines Diagrammscheibenbündels, daß das auf die Laufbuchse einwirkende Drehmoment, trotz der Verwendung von in die unterste Diagrammscheibe des Diagrammscheibenbündels beim Festspannen eindringenden Zacken, ein Dejustieren der Ausrichtung des Diagrammscheibenbündels zur Folge haben kann, was in der Regel unbemerkt bleibt. Dabei bewirkt, da der Zeithorizont der Diagrammscheiben üblicherweise 24 Stunden beträgt, eine geringfügige Verdrehung der Laufbuchse bereits eine Dejustierung des Diagrammscheibenbündels und somit einen Zeitversatz der Registrierungen im Minutenbereich. Darüber hinaus muß mit der Renkmutter ein loses und relativ kleines Bauteil gehandhabt werden, was insbesondere im Anwendungsmilieu eines Fahrtschreibers, das heißt im Fahrerhaus eines Nutzfahrzeuges, erhebliche Sorgfalt erfordert, da ein Herunterfallen der Renkmutter in der Regel mit einem hohen Suchaufwand verbunden ist.

Daraus ergibt sich die Aufgabe eine Anordnung zum Festspannen eines Diagrammscheibenbündels zu schaffen, die mit einem für Seriengeräte angemessenen Aufwand und einer zuverlässigen Funktion herstellbar ist und bei der die aufgezeigten Mängel der bisher üblichen Praxis beim Festspannen von Diagrammscheibenbündeln vermieden sind.

Die Lösung dieser Aufgabe beschreibt der kennzeichnende Teil des Anspruchs 1.
Weitere vorteilhafte Ausgestaltungen der Erfindung gehen aus den Unteransprüchen hervor.

Bei der gefundenen Lösung wird beim Festspannen des Diagrammscheibenbündels die Laufbuchse lediglich axial auf dem Zentrierdorn verschoben; ein die uhrzeitrichtige Ausrichtung des Diagrammscheibenbündels störendes Drehmoment tritt somit nicht auf. Der unverlierbar an der Aufnahme gehalterte Spannknopf ist trotz seiner relativen Kleinheit aufgrund der Ausbildung des Griffsteges gut betätigbar. Als besonders vorteilhaft sei ferner erwähnt, daß der Spannknopf mittelbar mittels der selbstsichernd an dem Zentrierdorn gelagerten Spannhebel drehbar gehaltert wird. Dabei dienen in der Ringwand des Zentrierdorns ausgebildete Rastverbindungsmittel den an den Spannhebeln angeformten Achsen zusätzlich als Lagerungen. Das heißt, die Montage der einzelnen Bauteile ist besonders einfach, außerdem ermöglicht die erfindungsgemäße Anordnung ein Vormontieren einer Aufnahme-Baugruppe, die aufgrund des im Zentrierdorn gelagerten Spannknopfes eine geringere Bauhöhe aufweist als eine mit herkömmlichen Befestigungsmitteln versehene Aufnahme, was insbesondere für flache, mit einer Schublade ausgerüstete Fahrtschreiber von Bedeutung ist.

Im folgenden sei die Erfindung anhand der beigefügten Zeichnungen näher erläutert. Es zeigen:
- Figur 1: eine perspektivische Explosionsdarstellung der die Aufnahme-Baugruppe bildenden Bauteile,
- Figur 2: eine Seitenansicht der montierten Aufnahme-Baugruppe,
- Figur 3: eine teilweise geschnittene Ansicht des Spannknopfes,
- Figur 4: eine Perspektivdarstellung eines Spannhebels,
- Figur 5: einen Teilschnitt eines Fahrtschreibers mit einem Schnitt der Aufnahme-Baugruppe in einer Funktionsstellung, bei der ein aufliegendes Diagrammscheibenbündel entnommen werden kann bzw. durch Betätigen des Spannknopfes festgespannt wird,
- Figur 6: eine Schnittdarstellung gemäß Figur 5, welche einen Zustand zeigt, bei dem das Diagrammscheibenbündel auf der Aufnahme festgespannt ist.

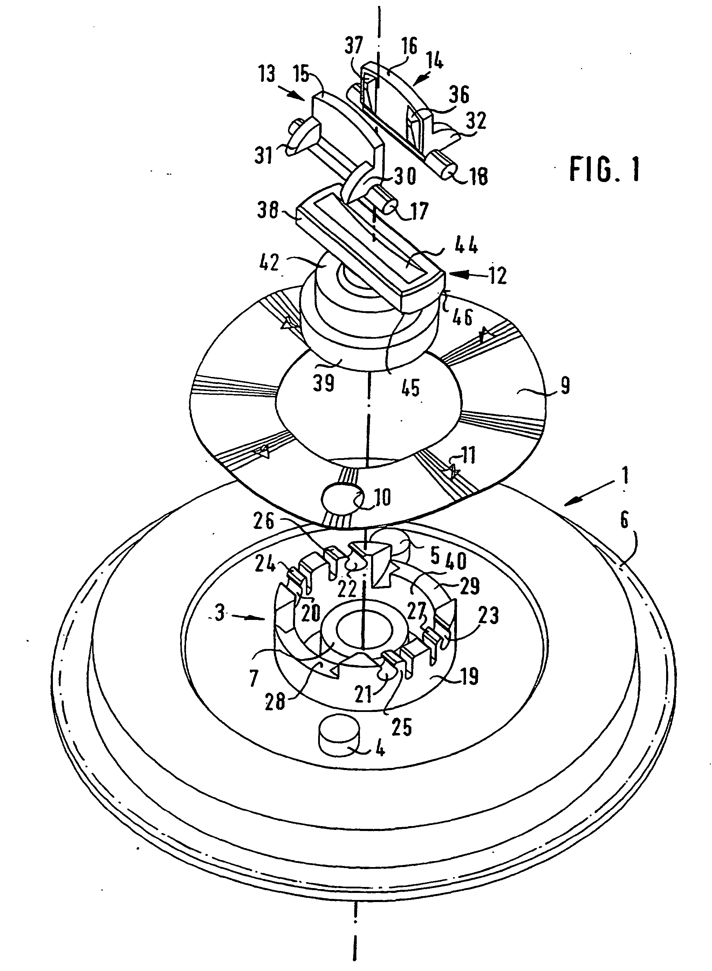

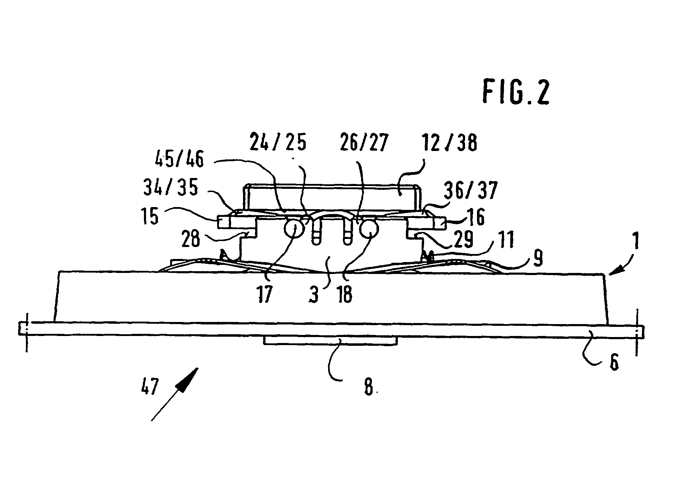

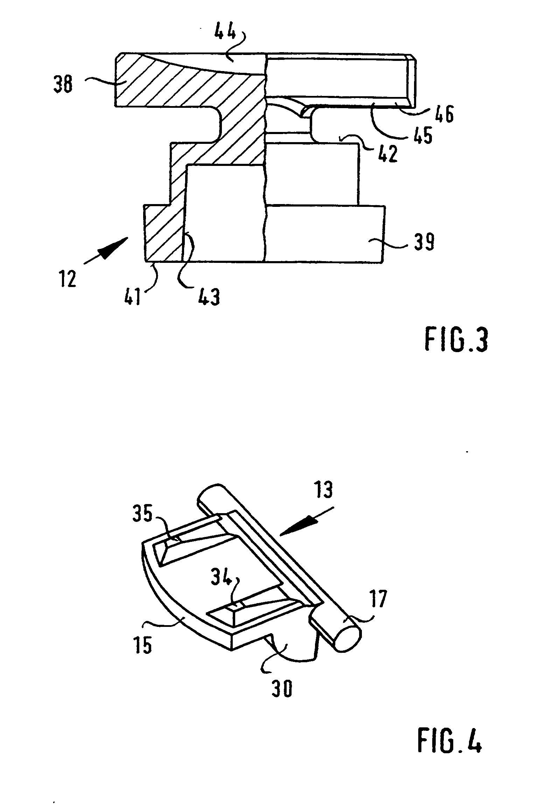

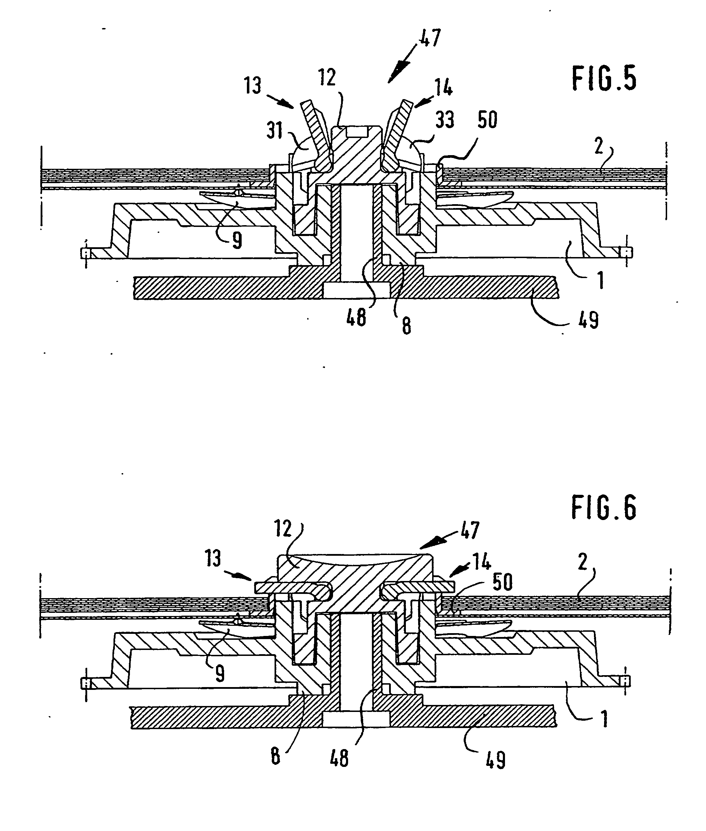

In der Figur 1, die als Übersichtsdarstellung dient, ist mit 1 eine Aufnahme für ein Diagrammscheibenbündel 2 (Figuren 5, 6) bezeichnet, an welcher als Funktionselemente ein Zentrierdorn 3, Zapfen 4 und 5, eine Verzahnung 6, eine koaxial zum zylindrisch aufgesenkten Zentrierdorn 3 angeordnete Lagerbuchse 7 sowie ein Laufbund 8 (Figur 2) ausgebildet sind. Mit 9 ist eine gewellte Ringfeder bezeichnet, welche mit den Zapfen 4, 5 zugeordneten Öffnungen, von denen eine 10, in Figur 1 sichtbar ist, versehen ist. Von mehreren aus der Ringfeder 9 herausgebogenen Mitnahmezacken ist einer mit 11 bezeichnet. In der Figur 1 sind außerdem ein Spannknopf 12 und mit dem Spannknopf 12 zusammenwirkende Spannhebel 13 und 14 dargestellt. Letztere sind, wie auch aus der Figur 4 ersichtlich ist, jeweils derart ausgebildet, daß an einer Spannplatte 15, 16 unmittelbar eine Achse 17, 18 angeformt ist, bzw. im einzelnen nicht bezeichnete Achsstummel ausgebildet sind.

Die Lagerung der Spannhebel 13, 14 erfolgt in in der Ringwand 19 des Zentrierdorns 3 ausgebildeten Lagerungen 20, 21, 22 und 23, welche axial geschlitzt und durch geeignete nicht bezeichnete Hinterschnitte derart freigestellt sind, daß wenigstens eine Lagerwand 24, 25, 26 und 27 federungsfähig ist und somit die Spannhebel 13, 14 mit dem Zentrierdorn 3 rastend verbindbar sind. In der Ringwand 19 vorgesehene Freisparungen 28 und 29 dienen dem Eintauchen der Spannplatten 15, 16 in/unter die Stirnebene des Zentrierdorns 3, wenn ein Diagrammscheibenbündel festgespannt wird; mit den nicht näher bezeichneten seitlichen Begrenzungswänden der Freisparungen 28, 29 wirken an den Spannhebeln 13, 14 angeformte Fahnen 30, 31, 32 und 33 im Sinne einer axialen Sicherung der Spannhebel 13, 14, insbesonderen in deren aufgeklappten Zustand zusammen.

Mit 34, 35 und 36, 37 sind an den Spannhebeln 13, 14 bzw. den Spannplatten 15, 16 ausgebildete Nocken bezeichnet, die einem an dem Spannknopf 12 angeformten Griffsteg 38 zugeordnet sind und die im Zusammenwirken mit der Ringfeder 9 beim Festspannen eines Diagrammscheibenbündels als Rastelemente dienen. Der Spannknopf 12, der mittels eines Bundes 39 innerhalb einer in dem Zentrierdorn 3 ausgebildeten zylindrischen Senkung 40 drehbar gelagert ist, kann sich beim Betätigen einerseits mittels einer stirnseitigen Ringfläche 41 im Grunde der zylindrischen Senkung 40 abstützen, andererseits erfolgt die Halterung des Spannknopfes 12 am Zentrierdorn 3 durch die mit dem Zentrierdorn 3 verrasteten Spannhebel 13, 14, wobei diese, bzw. deren Achsen 17, 18 mit einer am Spannknopf 12 ausgebildeten Stirnfläche 42 in Wirkverbindung stehen. Eine in dem Spannknopf 12 ausgebildete Senkung 43 ist derart gestaltet, daß mit Bezug auf die notwendige Lagerlänge der Aufnahme 1 eine möglichst geringe Bauhöhe der Anordnung gegeben ist. Ferner ist in dem Griffsteg 38 des Spannknopfes 12 eine Nut 44 ausgebildet, damit der Spannknopf auch mittels beispielsweise einer Münze betätigt werden kann. An dem Griffsteg 38 ausgebildete Gleitflächen 45, 46 sind für ein leichtgängiges Zusammenwirken mit den entsprechend gestalteten Nocken 34, 35 und 36, 37 der Spannhebel 13, 14 vorgesehen.

Durch Zusammenfügen der in Figur 1 dargestellten Bauelemente läßt sich die in Figur 2 dargestellte Baugruppe 47 bilden, bei der der Spannknopf 12, wie bereits erwähnt, mittelbar durch Verrasten der Spannhebel 13, 14 am Zentrierdorn 3 gehaltert ist. Die Baugruppe 47, die im Registrierlaufwerk eines Fahrtschreibers das letzte Glied darstellt, ist als solche durch Aufsetzen auf eine Achse 48 montierbar. Gemäß den Figuren 5 und 6 ist die als Hohlachse ausgebildete Achse 48 unmittelbar am Boden 49 beispielsweise einer Schublade, in der das Registrierlaufwerk angeordnet ist, angeformt.

Die Figur 5 zeigt die Spannhebel 13, 14 in einer Position, in der ein beschriebenes Diagrammscheibenbündel 2, dessen Laufbuchse mit 50 bezeichnet ist, entnommen werden kann oder ein noch nicht beschriebenes Diagrammscheibenbündel 2 auf den Zentrierdorn 3 aufgesetzt worden ist. Im letzteren Falle werden nachfolgend die Spannhebel 13, 14 bis zur Auflage auf den Rand der Laufbuchse 50 verschwenkt und danach der Spannknopf 12 in die in Figur 6 dargestellte Stellung gebracht, wobei er unter der Wirkung der Ringfeder 9 eine Rastposition zwischen den Nocken 34, 35 und 36, 37 der Spannhebel 13 und 14 einnimmt. Zur Entnahme des Diagrammscheibenbündels 2 ist dann zunächst der Spannknopf 12 um 90° zu verdrehen und die Spannhebel 13, 14 anzuheben, was bei griffgünstiger Gestaltung, gegebenenfalls einer stirnseitigen Verbreiterung ohne weiteres gleichzeitig und mit einer Hand erfolgen kann. Zur Halterung der Spannhebel 13, 14 in der Entnahme-/Einlegeposition können in geeigneter Weise ausgebildete Federn oder eine entsprechend abgestimmte Schwergängigkeit vorgesehen werden. Wesentlich weniger aufwendig ist es jedoch, beispielsweise zwischen den Achsen 17, 18 und dem Spannknopf 12, einen Formschluß derart vorzusehen, daß ein Totpunkt geschaffen wird und somit ein Kippeffekt entsteht.

Der Vollständigkeit halber sei noch erwähnt, daß die Ringfeder 9 nicht zwingend erforderlich ist und die Mitnahmezacken oder geeignete Mitnahmestifte unmittelbar an der Aufnahme 1 ausgebildet bzw. angebracht sind. Denkbar ist ferner anstatt der Ringfeder 9 einen elastomeren Ring vorzusehen, der sowohl Feder- als auch Mitnahmefunktion bietet.

## Patentansprüche

1. Anordnung zum Festspannen eines Diagrammscheibenbündels (2) auf einer vom Registrierlaufwerk eines Fahrtschreibers zeitsynchron angetriebenen Aufnahme, wobei an der Aufnahme ein Zentrierdorn (3) ausgebildet und das einem abschnittweisen, zeitlich aber ununterbrochenen Registrieren dienende Diagrammscheibenbündel (2) mit einer auf den Zentrierdorn (3) aufsteckbaren Laufbuchse (50) versehen ist, welche den einzelnen im Verlauf des Registrierens nach und nach von dem Diagrammscheibenbündel (2) abgetrennten und an einem gerätefesten Anschlag anliegenden Diagrammscheiben als Lager dient, und wobei Mittel zum Befestigen der Laufbuchse (50) auf der Aufnahme vorgesehen sind,
**dadurch gekennzeichnet,**
**daß** in dem Zentrierdorn (3) eine im wesentlichen zylindrische Senkung (40) ausgebildet ist,
**daß** ein Spannknopf (12) vorgesehen ist, welcher innerhalb der Senkung (40) drehbar gelagert ist und
**daß** an dem Zentrierdorn (3) wenigstens ein Spannhebel (13, 14) schwenkbar gelagert und derart ausgebildet ist, daß er in Wirkverbindung mit der Laufbuchse (50) eines auf dem Zentrierdorn (3) aufgenommenen Diagrammscheibenbündels (2) bringbar und mittels des Spannknopfes (12) niederhaltbar ist.

2. Anordnung nach Anspruch 1,
**dadurch gekennzeichnet,**
**daß** an dem Spannhebel (13, 14) eine Lagerachse (17, 18) unmittelbar ausgebildet ist,
**daß** die Lagerungen (20, 21) des Spannhebels (13) in der Ringwand (19) des Zentrierdorns (3) ausgebildet sind und
**daß** der Spannknopf (12) derart gestuft geformt ist, daß eine Stirnfläche (42) und die Lagerachse des Spannhebels (13) im Sinne einer axialen Sicherung des Spannknopfes (12) an dem Zentrierdorn (3) zusammenwirken.

3. Anordnung nach Anspruch 1,
**dadurch gekennzeichnet,**
**daß** der Spannhebel (13) mit dem Zentrierdorn (3) rastend verbindbar ist.

4. Anordnung nach Anspruch 1,
**dadurch gekennzeichnet,**
**daß** an dem Spannknopf (12) ein die Funktion eines Niederhalters ausübender Griffsteg (38) ausgebildet ist.

5. Anordnung nach Anspruch 1,
**dadurch gekennzeichnet,**
**daß** zwei Spannhebel (13, 14) vorgesehen und derart in dem Zentrierdorn (3) gelagert sind, daß ihre Achsen (17, 18) parallel zueinander und in einer Ebene quer zur Achse des Zentrierdorns (3) liegen.

6. Anordnung nach Anspruch 1,
**dadurch gekennzeichnet,**
**daß** an den Spannhebeln (13, 14) mit der Ringwand (19) des Zentrierdorns (3) zusammenwirkende, die Spannhebel (13, 14) in axialer Richtung sichernde Fahnen (30, 31 und 32, 33) angeformt sind.

7. Anordnung nach Anspruch 1,
**dadurch gekennzeichnet,**
**daß** der Aufnahme (1) ein axial federndes Element zugeordnet ist und
**daß** an den Spannhebeln (13, 14) paarweise Nocken (34, 35 und 36,37) angeformt sind, deren gegenseitiger Abstand im wesentlichen der Breite des Griffsteges (38) entspricht.

8. Anordnung nach Anspruch 7,
**dadurch gekennzeichnet,**
**daß** als federndes Element eine gewellte Ringfeder (9) Anwendung findet.

9. Anordnung nach Anspruch 7,
**dadurch gekennzeichnet,**
**daß** als federndes Element ein Ring aus einem stoffelastischen Material Anwendung findet.

## Claims

1. Arrangement for clamping a graph chart bundle (2) on a receiver driven synchronously by the recording drive mechanism of a tachograph, a centring stub (3) being formed on the receiver and the graph chart bundle (2) serving for chronologically sectored but uninterrupted recording being provided with a bearing sleeve (50), which can be pushed onto the centring stub (3) and which serves as bearing for the individual graph charts gradually separated from the graph chart bundle (2) in the course of the recording and resting against a stop fixed to the instrument, and means being provided for fixing the bearing sleeve (50) on the receiver, **characterized in that** a basically cylindrical recess (40) is formed in the centring stub (3), that a clamping knob (12) is provided, which is rotatably supported inside the recess (40), and that at least one clamping lever (13, 14) is pivotally supported on the centring stub (3) and is designed in such a way that it can be brought into operative connection with the bearing sleeve (50) of a graph chart bundle (2) accommodated on the centring stub (3) and can be held down by means of the clamping knob (12).

2. Arrangement according to Claim 1, **characterized in that** the a bearing shaft (17, 18) is formed directly on the clamping lever (13, 14), that the bearings (20, 21) of the clamping lever (13) are formed in the annular wall (19) of the centring stub (3) and that the clamping knob (12) is of stepped shape in such a way that an end face (42) and the bearing shaft of the clamping lever (13) interact so as to secure the clamping knob (12) axially on the centring stub (3).

3. Arrangement according to Claim 1, **characterized in that** the clamping lever (13) can be locked to the centring stub (3).

4. Arrangement according to Claim 1, **characterized in that** a gripping member (38) exercising the function of a depressor is formed on the clamping knob (12).

5. Arrangement according to Claim 1, **characterized in that** two clamping levers (13, 14) are provided and are supported in the centring stub (3) in such a way that their shafts (17, 18) lie parallel to one another in a transverse plane to the axis of the centring stub (3).

6. Arrangement according to Claim 1, **characterized in that** tabs (30, 31 and 32, 33), interacting with the annular wall (19) of the centring stub (3) and securing the clamping levers (13, 14) in an axial direction, are formed on the clamping levers (13, 14).

7. Arrangement according to Claim 1, **characterized in that** an axially sprung element is assigned to the receiver (1) and that pairs of cams (34, 35 and 36, 37), the mutual spacing of which basically corresponds to the width of the gripping member (38), are formed on the clamping levers (13, 14).

8. Arrangement according to Claim 7, **characterized in that** a corrugated annular spring (9) is used as sprung element.

9. Arrangement according to Claim 7, **characterized in that** a ring of an elastic material is used as sprung element.

## Revendications

1. Dispositif permettant de serrer une liasse (2) de disques-diagrammes sur un logement entraîné en synchronisme temporel par un mécanisme d'enregistrement d'un tachygraphe, où un mandrin de centrage (3) est ménagé sur le logement et où la liasse (2) de disques-diagrammes servant à un enregistrement section par section, mais ininterrompu dans le temps est dotée d'une douille de glissement (50) pouvant être enfichée sur le mandrin de centrage (3), laquelle sert de support aux différents disques-diagrammes détachés l'un après l'autre, au cours de l'enregistrement, de la liasse (2) de disques-diagrammes et appliqués contre une butée fixe dans l'appareil, et où des moyens sont prévus pour fixer la douille de glissement (50) sur le logement,
**caractérisé par le fait**
**qu'**un enfoncement (40) essentiellement cylindrique est ménagé dans le mandrin de centrage (3),
**qu'**il est prévu un bouton de serrage (12) monté en rotation à l'intérieur de l'enfoncement (40) et
**que** au moins un levier de serrage (13, 14) est monté, de façon qu'il puisse basculer, sur le mandrin de centrage (3) et est conçu de telle manière qu'il peut être manoeuvré en concourant avec la douille de glissement (50) d'une liasse (2) de disques-diagrammes mise en place sur le mandrin de centrage (3) et être maintenu enfoncé au moyen du bouton de serrage (12).

2. Dispositif selon la revendication 1
**caractérisé par le fait**
**qu'**un axe de palier (17, 18) est ménagé directement sur le levier de serrage (13, 14),
**que** les paliers (20, 21) du levier de serrage (13) sont ménagés dans la paroi annulaire du mandrin de centrage (3) et que le bouton de serrage (12) a une forme étagée de telle manière qu'une surface de tranche (42) et l'axe de palier du levier de serrage (13) agissent en commun dans le sens d'une sécurité axiale du bouton de serrage (12) sur le mandrin de centrage (3).

3. Dispositif selon la revendication 1
**caractérisé par le fait**
**que** le levier de serrage (13) peut être lié en se verrouillant au mandrin de centrage (3).

4. Dispositif selon la revendication 1
**caractérisé par le fait**
**qu'**une barrette de saisie (38) exerçant une fonction de pression vers le bas est ménagée sur le bouton de serrage (12).

5. Dispositif selon la revendication 1
**caractérisé par le fait**
**qu'**il est prévu deux leviers de serrage (13, 14) et qu'ils sont montés dans le mandrin de centrage (3) de telle manière que leurs axes (17, 18) sont parallèles entre eux et se trouvent dans un plan perpendiculaire à l'axe du mandrin de centrage (3).

6. Dispositif selon la revendication 1
**caractérisé par le fait**
**que**, sur les leviers de serrage (13, 14), sont ménagés des talons (30, 31 et 32, 33) agissant en commun avec la paroi annulaire (19) du mandrin de centrage (3) et assurant les leviers de serrage (13, 14) dans le sens radial.

7. Dispositif selon la revendication 1
**caractérisé par le fait**
**qu'**un élément élastique dans le sens axial est affecté au logement (1) et
**que**, sur les leviers de serrage (13, 14), sont ménagées paire par paire des cames (34, 35 et 36, 37) dont l'écartement réciproque correspond essentiellement à la largeur de la barrette de saisie (38).

8. Dispositif selon la revendication 7
**caractérisé par le fait**
**qu'**une rondelle ressort ondulée (9) est utilisée comme élément élastique.

9. Dispositif selon la revendication 7
**caractérisé par le fait**
**qu'**une bague en matière élastique est utilisée comme élément élastique.
